# EUROPÄISCHE PATENTSCHRIFT

(11) **EP 4 359 273 B1**
(45) Veröffentlichungstag und Bekanntmachung des Hinweises auf die Patenterteilung: **04.06.2025**
(21) Anmeldenummer: 23793889.9
(22) Anmeldetag: 24.10.2023
(51) Int. Cl.: B60T 13/74, F16D 55/226, F16D 65/18

(54) **ELEKTROMECHANISCHE BREMSVORRICHTUNG FÜR EIN KRAFTFAHRZEUG**
ELECTROMECHANICAL BRAKING DEVICE FOR A MOTOR VEHICLE
DISPOSITIF DE FREINAGE ÉLECTROMÉCANIQUE DESTINÉ À UN VÉHICULE AUTOMOBILE

(30) Priorität: 01.02.2023 BE 202305070
(43) Veröffentlichungstag der Anmeldung: 01.05.2024
(73) Patentinhaber: thyssenkrupp Presta AG, 9492 Eschen (LI); thyssenkrupp AG, 45143 Essen (DE)
(72) Erfinder: SZIMANDL, Barna, 9473 Gams (CH); PONGRATZ, Dennis, 6842 Koblach (AT); SLATINSKY, Jan, 9470 Buchs (CH)
(74) Vertreter: thyssenkrupp Intellectual Property GmbH
(86) Internationale Anmeldenummer: PCT/EP2023/079638
(87) Internationale Veröffentlichungsnummer: WO 2024/047260

(56) Entgegenhaltungen:
- DE-A1- 102017 123 266
- US-A1- 2015 203 079

## Beschreibung

### Stand der Technik

Die Erfindung betrifft eine elektromechanische Bremsvorrichtung für ein Kraftfahrzeug, umfassend eine elektromotorische Stellvorrichtung und ein damit verbundenes Bremsteil, das von der Stellvorrichtung verstellbar und mit einem Gegenbremsteil in Bremseingriff bringbar ist, wobei die Stellvorrichtung mindestens einen Stelltrieb aufweist, wobei der Stelltrieb eine Kugelrampenanordnung umfassend zwei Kurvenscheiben aufweist, wobei die Kurvenscheiben von einem elektrischen Stellmotor um eine Achse relativ zueinander drehend antreibbar sind, und einander axial gegenüberliegende, schräg zu der Achse liegende Laufbahnen aufweisen, zwischen denen jeweils abwälzbar eine Kugel angeordnet ist, wobei die Laufbahnen ein zumindest abschnittweise gerundetes Querschnittsprofil mit einem Laufbahnradius aufweisen, und die Kugel einen Kugeldurchmesser aufweist, wobei zwischen dem Laufbahnradius rg und dem Kugeldurchmesser ein Verhältnis größer als 0,5 ausgebildet ist.

Eine derartige Bremsvorrichtung eines Kraftfahrzeugs ist als Reibungsbremse ausgebildet, bei dem ein am Fahrgestellt abgestütztes, relativ zur Drehung des zu bremsenden Rades feststehendes Bremsteil mittels einer Stellvorrichtung in Bremseingriff gebracht werden kann mit einem Gegenbremsteil, welches mit dem Rad rotiert. Im Bremseingriff wird ein Reibkontakt zwischen Bremsteil und Gegenbremsteil erzeugt, wobei das durch Reibung erzeugte Bremsmoment umso größer ist, je höher die von der Stellvorrichtung in der Verstellrichtung ausgeübte Verstellkraft ist. Bei der an sich bekannten Bauform als Scheibenbremse umfasst das Bremsteil einen Bremsbelag, und das Gegenbremsteil eine mit dem Rad rotierende Bremsscheibe.

Die Stellvorrichtung einer gattungsgemäßen Bremsvorrichtung weist mindestens einen elektromotorischen Stelltrieb auf. Ein derartiger Stelltrieb ist ausgebildet, ein von einem elektrischen Motor um eine Achse ausgeübtes Drehmoment in eine axiale Verstell- oder Hubbewegung umzusetzen, durch die das Bremsteil in oder aus dem Bremseingriff gebracht werden kann.

Im gattungsbildenden Stand der Technik ist es beispielsweise aus der DE 10 2017 123 266 A1 bekannt, einen Stelltrieb als Kugelrampenanordnung, auch als Rampenlager bezeichnet, auszubilden. Dieser Stelltrieb dient als Betriebsbremse, um im Fahrbetrieb durch manuelle oder automatisierte Betätigung einen Bremseingriff zu erzeugen oder freizugeben.

Die Kugelrampenanordnung weist zwei Kurvenscheiben auf, von denen eine mit einem Antriebsrad verbunden ist. Die Kurvenscheiben weisen gegen die Achse geneigte Laufbahnen oder Rampen auf, zwischen denen in Umfangsrichtung Kugeln abwälzbar angeordnet sind. Eine relative Drehung der Kurvenscheiben durch den elektrischen Stellmotor um eine Achse wird durch die dabei in den Laufbahnen abrollenden Kugeln in eine relative axiale Verlagerung der Kurvenscheiben umgesetzt, die eine Verstellung des damit verbundenen Bremsteils bewirkt.

Um eine hohe Kraftübersetzung zwischen dem vom Stellmotor eingeleiteten Antriebsmoment und der Verstellung der Kurvenscheiben zu erreichen, so dass das Bremsteil mit einer möglichst hohen Bremskraft in Bremseingriff gebracht werden kann, ist eine relativ flache Neigung der Laufbahnen erforderlich, die auch als Steigung bezeichnet wird. Daraus resultiert eine hohe Hertz'sche Pressung, d.h. eine hohe Flächenpressung, mit der jeweils eine Kugel in ihrer näherungsweise punktförmigen Kontaktfläche gegen die Laufbahnen angedrückt wird. Diese Pressung ist umso höher, je flacher die Neigung ist. Zugleich soll der Stelltrieb beim Lösen der Bremse schnell und sicher wieder in seine Ausgangslage vor dem Bremsvorgang zurück gelangen. Um eine derartige Rückstellung zu ermöglichen, ist eine nicht-selbsthemmende Ausgestaltung des Stelltriebs erforderlich, bei der die beiden Kurvenscheiben durch eine geringe von außen einwirkende axiale Rückstellkraft wieder axial aufeinander zu bewegt werden können. Dabei rollen die Kugeln entgegen der vom Stellmotor zum Bremsen ausgeübten Drehung unter relativer Drehung der Kurvenscheiben wieder in ihre Ausgangslage zurück. Dies setzt voraus, dass die Kugeln möglichst leichtgängig mit geringer Rollreibung in den Laufbahnen rollen können. Die nicht-selbsthemmende Charakteristik könnte zwar prinzipiell durch eine steilere Neigung der Laufbahnen begünstigt werden, wodurch jedoch die Kraftübersetzung inakzeptabel verringert würde. Außerdem muss sichergestellt sein, dass die Laufbahnen auch nach einer Vielzahl von Bremsvorgängen über die gesamte Lebensdauer der Bremse nicht durch die hohen Flächenpressungen beeinträchtigt werden.

Folglich besteht im Stand der Technik ein Zielkonflikt bezüglich der Realisierung einer hohen Kraftübersetzung und einer nicht-selbsthemmenden Rückstellung.

Angesichts der vorangehend erläuterten Problematik ist es eine Aufgabe der vorliegenden Erfindung, eine verbesserte Funktion mit einer optimierten Rückstellcharakteristik zu realisieren.

### Darstellung der Erfindung

Diese Aufgabe wird erfindungsgemäß gelöst durch die Bremsvorrichtung mit den Merkmalen des Anspruchs 1. Vorteilhafte Weiterbildungen ergeben sich aus den Unteransprüchen.

Bei einer elektromechanischen Bremsvorrichtung für ein Kraftfahrzeug, umfassend eine elektromotorische Stellvorrichtung und ein damit verbundenes Bremsteil, das von der Stellvorrichtung verstellbar und mit einem Gegenbremsteil in Bremseingriff bringbar ist, wobei die Stellvorrichtung mindestens einen Stelltrieb aufweist, wobei der Stelltrieb eine Kugelrampenanordnung umfassend zwei Kurvenscheiben aufweist, wobei die Kurvenscheiben von einem elektrischen Stellmotor um eine Achse relativ zueinander drehend antreibbar sind, und
einander axial gegenüberliegende, schräg zu der Achse liegende Laufbahnen aufweisen, zwischen denen jeweils abwälzbar eine Kugel angeordnet ist, wobei die Laufbahnen ein zumindest abschnittweise gerundetes Querschnittsprofil mit einem Laufbahnradius aufweisen, und die Kugel einen Kugeldurchmesser aufweist, wobei zwischen dem Laufbahnradius rg und dem Kugeldurchmesser ein Verhältnis größer als 0,5 ausgebildet ist, ist erfindungsgemäß in einer ersten Ausführung der Erfindung vorgesehen, dass die Laufbahn in mindestens einem Endabschnitt eine Abflachung aufweist.

Für einen gegebenen Laufbahnradius rg und einen Kugeldurchmesser Db gilt für das Verhältnis C: C = rg / Db > 0,5.

Es wird ein optimiertes Verhältnis zwischen dem Laufbahnradius und dem Kugeldurchmesser vorgegeben, welches es ermöglicht, die den eingangs beschriebenen Zielkonflikt zwischen einer möglichst hohen Kraftübersetzung beim motorischen Antrieb des Stelltriebs und einer nicht-selbsthemmenden Rückstellung zu lösen. Dies erfolgt unter Berücksichtigung der strukturellen und funktionalen Besonderheiten der Kugelrampenanordnung. Diese betreffen insbesondere den Umstand, dass an jeder Kurvenscheibe eine geringe Anzahl von Laufbahnen vorgesehen sind, wobei zwischen zwei paarweise axial gegenüberliegenden Laufbahnen jeweils genau eine Kugel angeordnet ist. Durch die relativ geringe Anzahl der Kugeln, die über ihre Kontaktflächen die gesamte ausgeübte Verstellkraft auf die Laufbahnen übertragen, wird eine entsprechend hohe Hertz'sche Pressung erzeugt. Bei einer Kugelrampenanordnung ist es jedoch funktionsbedingt nicht möglich, wie etwa bei einem gewöhnlichen Wälzlager die Anzahl der Kugeln zwischen zwei Laufbahnen zu erhöhen, um die jeweilige Flächenpressung zu reduzieren. Eine Erhöhung der Anzahl der Laufbahnen zu demselben Zweck wäre ohne Beeinträchtigung der Funktionalität, beispielsweise des axialen Verstellwegs, ist ebenfalls nicht praktikabel.

Um die Kugelrampenanordnung unter Berücksichtigung der vorgenannten Besonderheiten zu optimieren, hat sich überraschenderweise herausgestellt, dass ein Verhältnis von größer als 0,5, welches eine untere Grenze für den relativen Laufbahnradius definiert, eine akzepabel niedrige Hertz'sche Pressung bei gleichzeitig hinreichend geringer Rollreibung ermöglicht. Dadurch kann der Vorteil einer hohen Belastbarkeit und Verstellkraft bei einer hinreichenden nicht-selbsthemmenden Rückstellung realisiert werden.

Bevorzugt kann vorgesehen sein, dass das Verhältnis kleiner gleich 0,75 ist. Zwischen dem Laufbahnradius rg und dem Kugeldurchmesser Db wird das Verhältnis C kleiner gleich 0,75 ausgebildet ist, so dass gilt: 0,75 ≥ C = rg / Db > 0,5. Dadurch wird ein oberer Grenzwert definiert. Dabei ist die Hertz'sche Pressung zwar höher, als bei einem Wert von 0,5, vorteilhaft ist jedoch eine verringerte Rollreibung.

In dem erfindungsgemäßen Bereich des Verhältnisses zwischen 0,5 und 0,75 kann eine qualitative Verbesserung der speziellen Funktionseigenschaften der Kugelrampenanordnung realisiert werden.

Besonders bevorzugt ist vorgesehen, dass das Verhältnis 0,55 beträgt. Es hat sich herausgestellt, dass dadurch ein spezifisches Optimum einer relativ geringen Hertz'schen Pressung bei relativ niedrigem Rollwiderstand diese Ausführung. Diese Ausgestaltung bietet besondere Vorteile bei einer Dreifach-Kugelrampenanordnung mit drei Kugeln und drei Laufbahnen pro Kurvenscheibe.

Besonders vorteilhaft ist es, dass eine Kurvenscheibe genau drei Laufbahnen aufweist und genau drei Kugeln vorgesehen sind. Dadurch wird eine sogenannte Dreifach-Kugelrampenanordnung realisiert. Die Laufbahnen und die Kugeln sind dabei vorzugsweise gleichartig ausgebildet und gleichmäßig über den Umfang verteilt angeordnet. Durch die drei Laufbahnen und die drei Kugeln wird eindeutig eine senkrecht zur Achse stehende Ebene definiert, und es wird ein eindeutig bestimmtes Dreipunkt-Lager gebildet. Dies ist für die Verstellung des Bremselements und damit für die sichere Funktion besonders vorteilhaft Die Erfindung ermöglicht insbesondere bei dieser Ausführung eine funktionale Optimierung.

Eine vorteilhafte Ausführung ist, dass die Laufbahn ein durchgehend kreisrund gebogenes Querschnittsprofil aufweist. Das Querschnittprofil wird durch einen einzigen durchgehenden Kreisbogenabschnitt gebildet, in dem die Kugel die Laufbahn in einer einzigen, näherungsweise punktförmigen Kontaktfläche axial kontaktiert. Das erfindungsgemäße Verhältnis ermöglicht eine optimal reduzierte Flächenpressung bei geringem Rollwiderstand. Von Vorteil ist dabei weiterhin, dass die maximale Materialbeanspruchung so weit begrenzt werden kann, dass bekannte Wälzlagerstähle für die Kurvenscheiben eingesetzt werden können, um eine jederzeit hinreichende Dauerbelastbarkeit und Betriebssicherheit zu gewährleisten.

Alternativ ist es möglich, dass die Laufbahn ein gotisches Querschnittsprofil aufweist. Ein gotisches Profil weist definitionsgemäß zwei spiegelsymmetrische, spitz zusammenlaufende Kreisbogensegmente auf, welche die gegenüberliegenden Seitenflanken der Laufbahn bilden. Die Kreisbogensegmente können jeweils einen erfindungsgemäßen Laufbahnradius aufweisen. Die Kugel kontaktiert jede der beiden Kreisbogensegmente jeweils in einer axial versetzten Kontaktfläche. Mit andern Worten kontaktiert die Kugel die beiden Laufbahnen in insgesamt vier Kotaktflächen. Dadurch kann die Hertz'sche Pressung und die Rollreibung reduziert werden.

Es ist möglich, dass die Laufbahn einen linearen oder nichtlinearen Verlauf der Neigung aufweist. Durch einen im Wesentlichen linearen Verlauf kann eine gleichmäßige Kraftübertragung über den gesamten Verstellweg realisiert werden. Ein nichtlinearer Verlauf, der über die Erstreckung einer Laufbahn in Umfangsrichtung beispielsweise bogenförmig oder S-förmig ausgebildet sein kann, ist abhängig von der jeweiligen Winkelstellung der Kurvenscheiben ein nichtlinearer Verlauf der Kraftübertragung realisierbar. Beispielsweise kann durch eine steilere Neigung am Anfang oder im mittleren Bereich der Laufbahn bei gleichbleibender Drehzahl des motorischen Antriebs eine schnellere Verstellung erreicht werden, und durch eine flachere Neigung im Endbereich, kurz bevor das Bremselement in den reibschlüssigen Bremseingriff gelangt, eine höhere Verstellkraft, die für eine erhöhte Bremswirkung sorgt.

Erfindungsgemäß ist vorgesehen, dass die Laufbahn in mindestens einem Endabschnitt eine Abflachung aufweist. Die Laufbahn erstreckt sich in Umfangsrichtung über eine definierte Länge, die zwischen ihren umfangsseitigen Enden den Wälz- oder Abrollweg der Kugel begrenzt. Zwischen den Enden weist die Laufbahn eine definierte Neigung auf, die auch als Steigung bezeichnet werden kann. Ein Endabschnitt wird durch einen Abschnitt am Ende des möglichen Abrollwegs gebildet, der in Umfangsrichtung gemessen bevorzugt mindestens einem Kugelradius entspricht. Im Bereich der Abflachung ist die Neigung der Laufbahn gegenüber der Achse, relativ zu einem an den Endabschnitt anschließenden Rollabschnitt reduziert. Es kann beispielsweise eine Neigung von null ausgebildet sein, wobei die Laufbahn senkrecht zur Achse verläuft. Entsprechend kann die Kugel gegenüber von außen auf den Stelltrieb axial einwirkenden Rückstellkräften selbsthemmend fixiert sein. Dadurch kann die Funktion einer Feststell- oder Parkbremse realisiert sein.

Eine vorteilhafte Weiterbildung kann vorsehen, dass die Laufbahn in mindestens einem Endabschnitt eine muldenförmige Vertiefung aufweist. Die Vertiefung ist in einem Endbereich, auch als Endabschnitt bezeichnet, der Laufbahn angeordnet, in dem der Bremseingriff erzeugt wird. Im Bereich der Vertiefung ist die Neigung abschnittweise der Neigung zwischen den Endabschnitten entgegengesetzt. Die Vertiefung kann bevorzugt bogenförmig gerundet sein. Vorzugsweise kann sie, in Umfangsrichtung gemessen, um mindestens einen Kugelradius vom Ende der Laufbahn beabstandet sein. Die Kugel kann beim Erreichen des Bremseingriffs in die Vertiefung rollen und eine in Umfangsrichtung stabile Rastposition einnehmen. In der Rastposition ist die Kugel unabhängig von der auf die Kurvenscheiben einwirkenden axialen Rückstellkraft gehalten. Dadurch kann eine definierte, selbsthaltende Feststell-Bremsposition der Kugelrampenanordnung realisiert werden.

Eine vorteilhafte Weiterbildung kann vorsehen, dass die Laufbahn in mindestens einem Endabschnitt eine Schulter aufweist. Wenn die Kugeln an der Schulter des Endabschnitts anliegen, ist die Bremse in der Freigabestellung, sprich es findet kein Bremseingriff statt. Die Schulter begrenzt die Laufbahn in Umfangsrichtung.

Bevorzugt weist eine Laufbahn einen ersten Endabschnitt auf, in dem die Vertiefung ausgebildet ist, und einen zweiten Endabschnitt, in dem die Schulter ausgebildet ist. In einer weiteren vorteilhaften Weiterbildung bildet die Schulter einer ersten Laufbahn und die Vertiefung einer zweiten Laufbahn jeweils eine Flanke einer Erhebung. Die Erhebung bildet in Umfangsrichtung die Grenze zwischen der einen Laufbahn und der anderen Laufbahn, beispielsweise zwischen einer ersten Laufbahn und einer zweiten Laufbahn, und ist in Umfangsrichtung zwischen den Laufbahnen angeordnet.

Es kann bevorzugt vorgesehen sein, dass die Stellvorrichtung mindestens zwei seriell gekoppelte Stelltriebe aufweist. Ein erster und ein zweiter Stelltrieb sind dabei bezüglich ihrer Verstellwege axial in Reihe angeordnet. Der bevorzugt koaxial zum ersten Stelltrieb angeordnete zweite Stelltrieb vorzugsweise ist ebenfalls ausgebildet, um eine Drehung des Antriebselements in eine axiale Verstellung des Bremsteils umzusetzen. Durch einen ersten Stelltrieb, der gemäß der Erfindung ausgebildet sein kann, kann eine Betriebsbremse realisiert sein. Ein daran seriell angekoppelter zweiter Stelltrieb kann beispielsweise zur Justierung des Luftspalts zwischen dem Brems- und Gegenbremselement vorgesehen sein.

Es ist vorteilhaft, dass die seriell gekoppelten Stelltriebe koaxial angeordnet sind. Dabei kann jeder Stelltrieb ein um die Achse drehend antreibbares Antriebsrad aufweisen, welche in Getriebeeingriff mit einem Stellmotor stehen kann. Bei der erfindungsgemäßen Ausführung kann ein Antriebsrad, beispielsweise ein Zahnrad, drehfest mit einer antriebsseitigen Kurvenscheibe verbunden sein.

In der vorgenannten Ausführung kann es vorteilhaft sein, dass einer der Stelltriebe eine Kugelrampenanordnung aufweist, und ein anderer Stelltrieb eine nach einem anderen Wirkprinzip arbeitende Verstelleinrichtung. Beispielsweise kann der zweite Stelltrieb einen Spindeltrieb aufweisen, bei dem das Antriebselement eine drehend antreibbare Spindelmutter aufweist, und das Abtriebselement eine darin eingreifende, relativ dazu axial verlagerbare Gewindespindel, oder umgekehrt. Es können auch andere Bauformen von Stelltrieben eingesetzt werden, die beispielsweise Nocken- oder Kurvenscheiben, Kippstiftanordnungen oder dergleichen umfassen können, und bevorzugt ebenfalls eine motorische Drehung eines Antriebselements in eine lineare Verstellung des Abtriebselements umsetzen.

In einer vorteilhaften Weiterbildung kann es vorgesehen sein, dass zumindest einer der Kurvenscheiben als Sinterbauteil oder als Kaltfliesspressteil ausgebildet ist. Sinterbauteile werden aus pulverförmigen Materialien hergestellt, wobei das Material durch Druck und Erhitzung zu einem festen Körper verbunden wird. Dadurch lassen sich komplizierte Konturen rationell und mit hoher Maßhaltigkeit herstellen. Außerdem können vorteilhafte Materialeigenschaften realisiert werden, beispielsweise eine hohe Härte und damit eine hohe Verschleißfestigkeit.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Bremsvorrichtung in einer schematischen perspektivischen Ansicht,
- Figur 2: eine seitliche Ansicht der Bremsvorrichtung gemäß Figur 1,
- Figur 3: die erfindungsgemäße Stellvorrichtung der Bremsvorrichtung gemäß Figur 1 freigestellt in einer schematischen perspektivischen Ansicht,
- Figur 4: einen Schnitt Q-Q durch die Bremsvorrichtung gemäß Figur 1,
- Figur 5: den ersten Stelltrieb der Bremsvorrichtung gemäß Figur 1 freigestellt in einer schematischen perspektivischen Darstellung,
- Figur 6: eine vergrößerte Detailansicht der Stellvorrichtung aus Figur 4,
- Figur 7: einen Längsschnitt durch einen erfindungsgemäßen Stelltrieb gemäß Figur 5,
- Figur 8: einen vergrößerten Ausschnitt aus Figur 7,
- Figur 9: eine schematisch axial auseinander gezogene Darstellung des Stelltriebs gemäß Figuren 7 bis 8,
- Figur 10: freigestellte perspektivische Darstellungen der Kurvenscheiben des Stelltriebs gemäß Figuren 7 bis 9,
- Figur 11: eine vergrößerte Darstellung des Schnitts B-B aus Figur 10.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

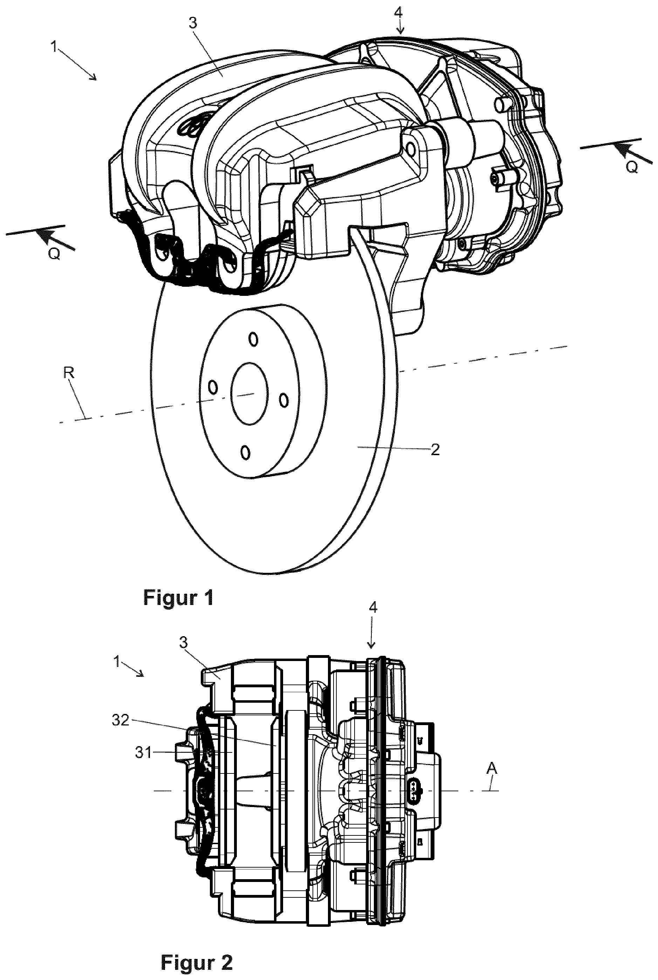

Fig. 1 zeigt eine erfindungsgemäße Bremsvorrichtung als Ganzes, die als Scheibenbremse ausgebildet ist. Diese umfasst eine Bremsscheibe 2, die ein Gegenbremsteil im Sinne der Erfindung bildet und mit einem hier nicht dargestellten, um eine Radachse R rotierbaren Fahrzeugrad verbunden ist. Ein Bremssattel 3 umgreift die beiden axialen Stirnflächen der Bremsscheibe 2.

Die Bremsscheibe 2 ist hier als unbelüftete Bremscheibe aus Vollmaterial ausgebildet. Alternativ kann diese auch als innenbelüftete Bremsscheibe ausgebildet sein.

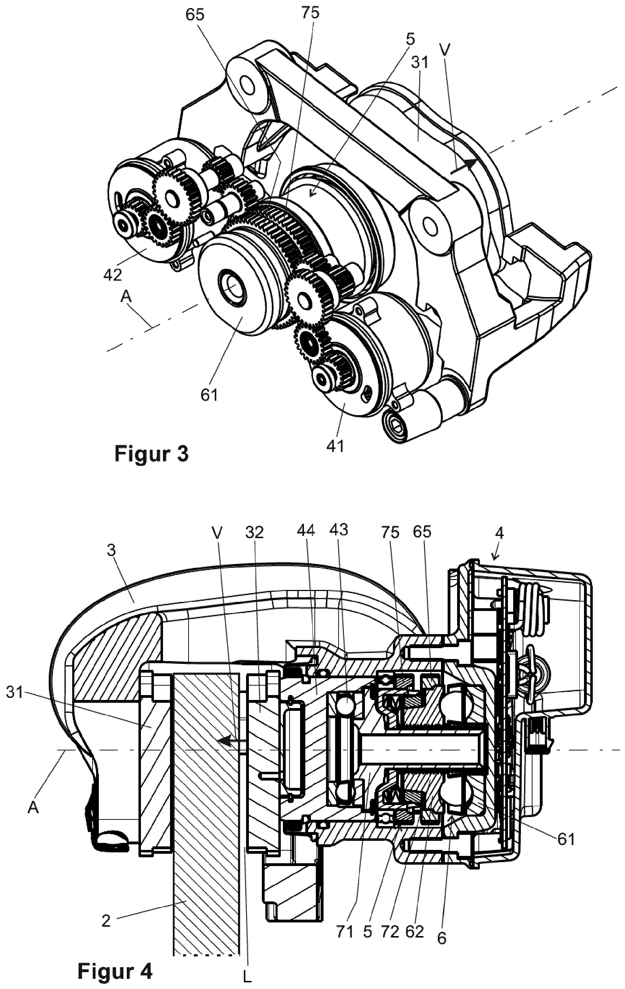

An dem Bremssattel 3 ist ein erfindungsgemäßer elektrischer Bremsaktuator 4 angebracht, die in Figur 3 in einer separaten, freigestellten schematischen perspektivischen Ansicht gezeigt ist, und in den Figuren 4 bis 7 im Detail erläutert wird.

Der Bremsaktuator 4 umfasst eine Stellvorrichtung 5 die sich axial in Richtung einer Achse A erstreckt, welche parallel zur Radachse R liegt und die Verstellrichtung V der Stellvorrichtung 5 angibt.

Wie in der Schnittdarstellung von Figur 4 längs der Achse A erkennbar ist, ist die Bremsscheibe 2 axial zwischen zwei Bremsbelägen 31 und 32 angeordnet. Der eine Bremsbelag 31 ist auf der dem Bremsaktuator 4 abgewandten Seite fest an dem Bremssattel 3 abgestützt. Der andere Bremsbelag 32, der ein Bremsteil im Sinne der Erfindung bildet, ist an der Stellvorrichtung 5 angebracht und von dieser in der durch die Achse A gegebenen, axialen Verstellrichtung V zur Erzeugung des Bremseingriffs auf die Bremsscheibe 2 zu verstellbar, wie in Figur 4 mit dem Pfeil angedeutet ist.

Im unbetätigten Zustand der Bremsvorrichtung 1 befindet sich zwischen der Bremsscheibe 2 und dem verstellbaren Bremsbelag 32 ein axialer Luftspalt L, der in Figur 4 schematisch übertrieben breit eingezeichnet ist.

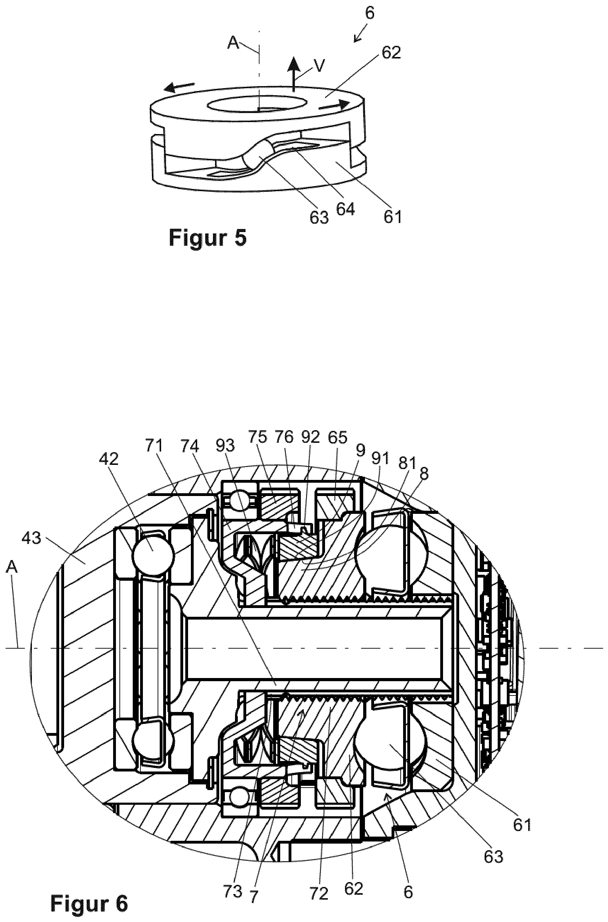

Der Aufbau der Stellvorrichtung 5 ist in Figur 4 und in dem vergrößerten Ausschnitt daraus in Figur 6 dargestellt.

Die Stellvorrichtung 5 umfasst einen ersten Stelltrieb 6, der eine Kugelrampenanordnung, auch als Rampenlager bezeichnet, aufweist, und einen damit axial (bezüglich der Achse A) seriell gekoppelten zweiten Stelltrieb 7, der einen Spindeltrieb aufweist.

Der erste Stelltrieb 6, der im gezeigten Beispiel als Kugelrampenanordnung bzw. Rampenlager ausgebildet ist, umfasst eine axial und drehfest an dem Bremsaktuator 4 abgestützte, antriebseitige Kurvenscheibe 61 und eine abtriebsseitige Kurvenscheibe 62. Zwischen den Kurvenscheiben 61 und 62 sind Kugeln 63 angeordnet. Wie in der schematisch freigestellten Ansicht von Figur 5 erkennbar ist, weisen die Kurvenscheiben 61 und 62 einander axial gegenüberliegende rampenartige, schräg zur Achse A liegende Laufbahnen 64 auf, zwischen denen Kugeln 63 abwälzbar sind. Eine Drehung der abtriebsseitigen Kurvenscheibe 62, in Figur 5 oben, relativ zu der feststehenden antriebsseitigen Kurvenscheibe 61 - wie schematisch mit den gebogenen Pfeilen angedeutet - führt zu einer linearen Verstellung der abtriebsseitigen Kurvenscheibe 62 in der Verstellrichtung V parallel zur Achse A. Dadurch kann der Bremsbelag 32 wie in Figur 4 eingezeichnet durch Betätigung des ersten Stelltriebs 6 in Bremseingriff gebracht werden.

Die Kurvenscheibe 62 ist mit einem koaxialen Zahnrad 65 verbunden, welches als Stirnrad ausgebildet ist und ein Antriebsrad im Sinne der Erfindung bildet.

Das Zahnrad 65 steht im Getriebeeingriff mit einem ersten elektrischen Stellmotor 41. Dieser ermöglicht den drehenden Antrieb der Kurvenscheibe 62 und damit eine Betätigung des ersten Stelltriebs 6.

Der zweite Stelltrieb 7, der im gezeigten Beispiel als Spindeltrieb ausgebildet ist, weist abtriebsseitig eine Gewindespindel 71 auf, die in das Innengewinde einer antriebsseitigen Spindelmutter 72 eingreift. Dieses Innengewinde ist in der abtriebsseitigen Kurvenscheibe 62 des ersten Stelltriebs 6 ausgebildet, so dass das die Funktionen der abtriebsseitigen Kurvenscheibe 62 und der antriebsseitigen Spindelmutter 72 in einem Bauelement vereinigt sind.

Die Gewindespindel 71 ist über ein Nabenteil 74 mit einem koaxialen Zahnrad 75 verbunden, welches axial fixiert in dem Bremsaktuator 4 drehbar gelagert ist. Über Mitnehmer 73, die beispielsweise radial vorstehende Vorsprünge oder Zähne aufweisen können, die in axiale Schlitze des Nabenteils 74 axial verschieblich eingreifen, ist die Gewindespindel drehmomentschlüssig, aber axial verlagerbar mit dem Zahnrad 75 gekuppelt.

Das Zahnrad 75 kann wie das Zahnrad 65 als Stirnrad ausgeführt sein und ist zu diesem benachbart koaxial angeordnet. Dieses Zahnrad 75 steht im Getriebeeingriff mit einem zweiten elektrischen Stellmotor 42. Dieser ermöglicht den drehenden Antrieb der Gewindespindel 71 und damit eine Betätigung des zweiten Stelltriebs 7.

Die Gewindespindel 71 ist über ein Drucklager 43, beispielsweise wie dargestellt ein Axialwälzlager, axial mit einem Druckstück 44 verbunden, an dem der verlagerbare Bremsbelag 32 angebracht ist, wie in Figur 4 erkennbar ist. Das Druckstück 44 kann auch als Kolben bezeichnet werden.

Die erfindungsgemäße Kupplungsvorrichtung weist ein Reibelement 8 auf, welches als koaxialer, konischer Ansatz von der Kurvenscheibe 62 auf den zweiten Stelltrieb 7 zu gerichtet ist. Der konische Ansatz weist eine außen auf einem Außenkonus angeordnete konische Reibfläche 81 auf. Das Reibelement 81 kann bevorzugt einstückig mit der Kurvenscheibe 62 / Spindelmutter 72 ausgebildet sein.

Das Reibelement 8 ist im Kupplungseingriff reibschlüssig mit einem Gegenreibelement 9 gekuppelt. Dabei taucht der konische Ansatz axial in eine korrespondierende konische Öffnung des Gegenreibelements 9 ein, welche eine in einem Innenkonus angeordnete konische Reibfläche 91 aufweist. Im Kupplungseingriff liegen die Reibfläche 81 und die Gegenreibfläche 91 reibschlüssig gegeneinander an, wie in Figur 6 deutlich erkennbar ist.

Das Gegenreibelement 9 ist über Mitnehmer 92, die in korrespondierende Schlitze 76 in dem Nabenteil 74 oder dem Zahnrad 75 axial verschiebbar eingreifen, drehmomentschlüssig, aber axial verlagerbar mit dem Zahnrad 75 gekuppelt.

Zwischen dem Zahnrad 75 oder dem damit verbundenen Nabenteil 74 und dem Gegenreibelement 9 ist ein Federelement 93 angeordnet. Durch dessen axial wirksame Federkraft wird das Gegenreibelement 9 gegen das Reibelement 8 elastisch verspannt. Dadurch wird ein definiertes Kupplungsmoment der durch das Reibelement 8 und das Gegenreibelement 9 gebildeten erfindungsgemäßen Reibkupplung erzeugt.

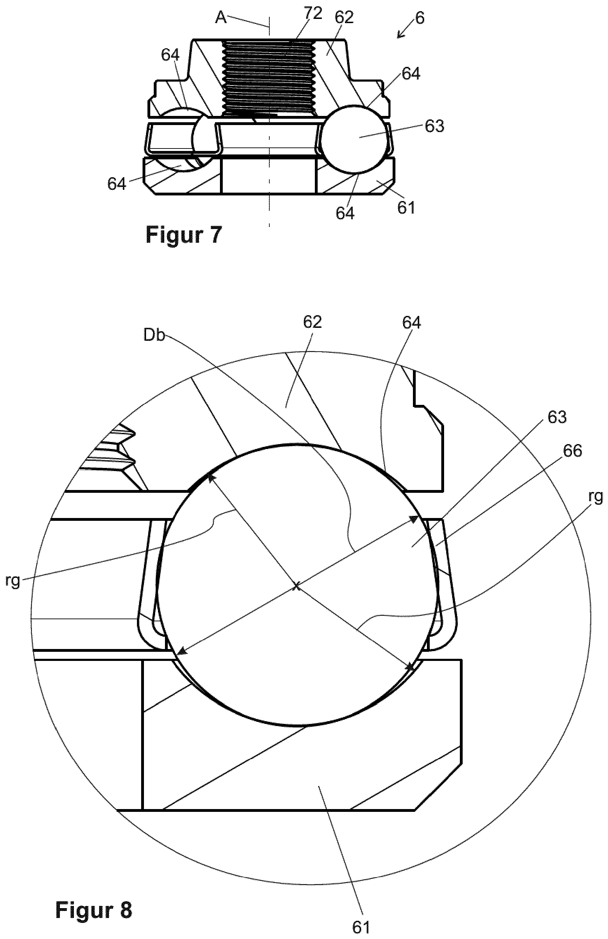

Figur 7 zeigt einen Längsschnitt entlang der Achse A durch den erfindungsgemäßen Stellantrieb 6 gemäß Figuren 5 und 6. In Figur 8 ist ein vergrößerter Ausschnitt aus Figur 7 im Bereich der Laufbahnen 64 dargestellt.

Die Kugel 63 hat einen Kugeldurchmesser Db.

Die Laufbahnen 64 weisen im gezeigten Beispiel ein durchgehend kreisrund gebogenes Querschnittsprofil auf, das einen Laufbahnradius rg aufweist.
Erfindungsgemäß gilt für das Verhältnis C = rg / Db : C > 0,5,
und bevorzugt: 0,75 ≥ C = rg / Db > 0,5.

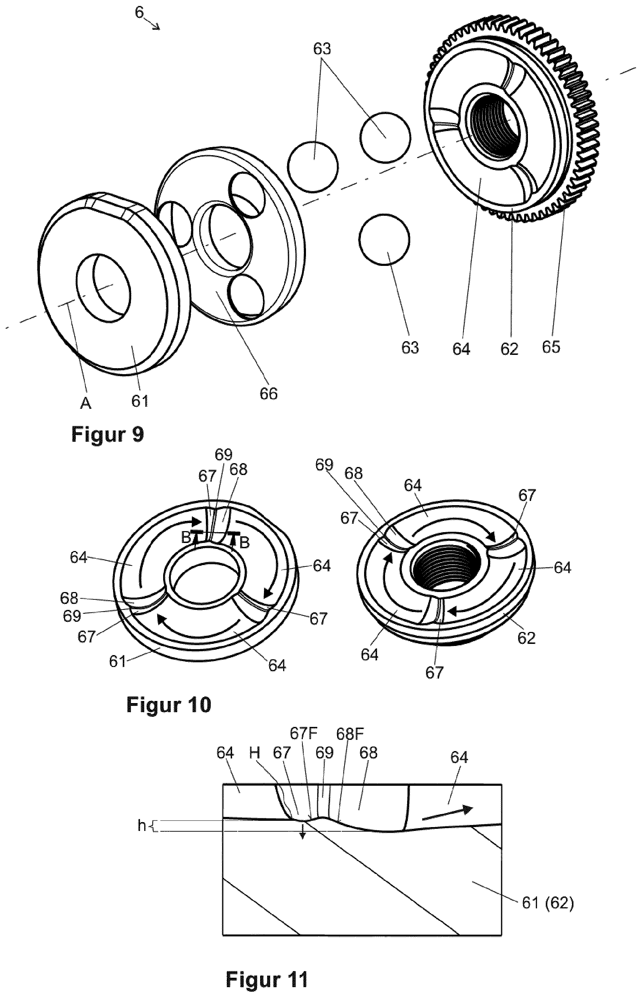

In Figur 10 sind die beiden Kurvenscheiben 61 und 62 separat perspektivisch dargestellt, jeweils in einer Ansicht auf die Laufbahnen 64. Dabei ist in Figur 10 mit den gebogenen Pfeilen die Neigung der Laufbahnen 64 angedeutet, wobei diese in Pfeilrichtung relativ zur Achse A in Umfangsrichtung ansteigen.

Jeweils genau drei Laufbahnen 64 sind gleichmäßig über den Umfang verteilt angeordnet. Die darin abrollbaren drei Kugeln 63 sind ebenfalls über den Umfang gleichmäßig verteilt, und werden in ihrer relativen Position frei rotierbar in einem Kugelkäfig 66 gehalten.

Figur 11 zeigt eine vergrößerte Schnittansicht B-B aus Figur 10 durch die Endbereiche der Laufbahn 64 (in Umfangsrichtung), der am weitesten von der Kurvenscheibe 61 bzw. 62 axial vorsteht. Dabei gehört der eine Endbereich zu der einen Laufbahn 64 und der andere Endbereich zu der benachbarten Laufbahn 64. Die Neigung der Laufbahn 64 ist schematisch stark übertrieben mit dem schräggestellten Pfeil angedeutet. In dem ersten Endbereich ist jeweils eine muldenförmige Vertiefung 67 in die Laufbahn 64 eingeformt, die in der Zeichnung schematisch mit einem nach unten gerichteten Pfeil angedeutet ist. In dem zweiten Endbereich ist eine zur Laufbegrenzung der Kugeln 63 ausgebildete Schulter 68 vorgesehen, wobei Schulter 68 und Vertiefung 67 jeweils die Flanken 67F, 68F der Erhebung 69 bilden. In diese Vertiefung 67 kann die Kugel 63 einrasten, wenn sie beim Verstellen die Endposition erreicht, in der die Kurvenscheiben 61 und 62 axial nahezu maximal auseinander bewegt sind und dabei einen Hub h realisiert. Diese Verstellposition entspricht dem Bremseingriff. Die Kurvenscheiben 61 und 62 sind axial maximal auseinander bewegt, wenn sich die Kugeln 63 kurz vor dem Hineinbewegen in die Vertiefung 67 befinden. Diese Position ist mit H gekennzeichnet. Durch den Sitz in der Vertiefung 67 wird die Kugel 63 lösbar fixiert, um eine Feststell- oder Parkbremsstellung zu realisieren, in der die Bremskraft entgegen der von der Bremsscheibe 2 auf den Bremsbelag 32 ausgeübten axialen Rückstellkraft stabil gehalten wird. Dank dieser Vertiefung 67 ist es in der Festellbremsposition möglich, den Stellmotor 41 mit einem sehr geringen Strom oder sogar ohne Bestromung zu betreiben, so dass diese Parkposition ohne zeitliche Beschränkung gehalten werden kann. Im Unterschied dazu ist der Verstelltrieb 6 nicht-selbsthemmend, wenn sich die Kugel 63 im Verlauf der Laufbahn 64 außerhalb der Vertiefung 67 und der Schulter 68 befindet. Dann können die Kurvenscheiben 61 und 62 nach Beendigung eines Bremsvorgangs bereits durch eine relativ geringe Rückstellkraft wieder axial aufeinander zu bewegt werden, um den Bremseingriff zu lösen. Wenn sich die Kugeln 63 im Verlauf der Laufbahn 64 außerhalb der Vertiefung 67 und nicht in Anlage an der Schulter 68 befinden, dann ist die Bremse in der Betriebsbremsstellung. Wenn die Kugeln 63 an der Schulter anliegen, ist die Bremse in der Freigabestellung, sprich es findet kein Bremseingriff statt.

### Bezugszeichenliste

- 1: Bremsvorrichtung
- 2: Bremsscheibe
- 3: Bremssattel
- 31, 32: Bremsbelag
- 4: Bremsaktuator
- 41, 42: Stellmotor
- 43: Drucklager
- 44: Druckstück
- 5: Stellvorrichtung
- 6: erster Stelltrieb
- 61: Kurvenscheibe
- 62: Kurvenscheibe (integriert mit Spindelmutter 72)
- 63: Kugel
- 64: Laufbahn
- 65: Zahnrad
- 66: Kugelkäfig
- 67: Vertiefung
- 7: zweiter Stelltrieb
- 71: Gewindespindel
- 72: Spindelmutter (integriert mit Kurvenscheibe 62)
- 73: Mitnehmer
- 74: Nabenteil
- 75: Zahnrad
- 76: Schlitz
- 8: Reibelement
- 81: Reibfläche
- 9: Gegenreibelement
- 91: Gegenreibfläche
- 92: Mitnehmer
- 93: Federelement
- A: Achse
- R: Radachse
- V: Verstellrichtung
- L: Luftspalt
- Db: Kugeldurchmesser
- rg: Laufbahnradius

## Patentansprüche

1. Elektromechanische Bremsvorrichtung (1) für ein Kraftfahrzeug, umfassend eine elektromotorische Stellvorrichtung (5) und ein damit verbundenes Bremsteil (32), das von der Stellvorrichtung (5) verstellbar und mit einem Gegenbremsteil (2) in Bremseingriff bringbar ist,
wobei die Stellvorrichtung (5) mindestens einen Stelltrieb (6, 7) aufweist,
wobei der Stelltrieb (6) eine Kugelrampenanordnung (6) umfassend zwei Kurvenscheiben (61, 62) aufweist,
wobei die Kurvenscheiben (61, 62) von einem elektrischen Stellmotor (41, 42) um eine Achse (A) relativ zueinander drehend antreibbar sind, und
einander axial gegenüberliegende, schräg zu der Achse (A) liegende Laufbahnen (64) aufweisen, zwischen denen jeweils abwälzbar eine Kugel (63) angeordnet ist,
wobei die Laufbahnen (64) ein zumindest abschnittweise gerundetes Querschnittsprofil mit einem Laufbahnradius (rg) aufweisen, und die Kugel (63) einen Kugeldurchmesser (Db) aufweist, wobei zwischen dem Laufbahnradius (rg) und dem Kugeldurchmesser (Db) ein Verhältnis (C) größer als 0,5 ausgebildet ist
**dadurch gekennzeichnet,**
**dass** die Laufbahn (64) in mindestens einem Endabschnitt eine Abflachung aufweist.

2. Bremsvorrichtung nach Anspruch 1, **dadurch gekennzeichnet, dass** das Verhältnis (C) kleiner gleich 0,75 ist.

3. Bremsvorrichtung nach einem der vorangehenden Ansprüche, **dadurch gekennzeichnet, dass** das Verhältnis (C) 0,55 beträgt.

4. Bremsvorrichtung nach einem der vorangehenden Ansprüche, **dadurch gekennzeichnet, dass** die Laufbahn (64) ein durchgehend kreisrund gebogenes Querschnittsprofil aufweist.

5. Bremsvorrichtung nach einem der vorangehenden Ansprüche, **dadurch gekennzeichnet, dass** die Laufbahn (64) ein gotisches Querschnittsprofil aufweist.

6. Bremsvorrichtung nach einem der vorangehenden Ansprüche, **dadurch gekennzeichnet, dass** die Laufbahn (64) einen linearen oder nichtlinearen Verlauf der Neigung aufweist.

7. Bremsvorrichtung nach einem der vorangehenden Ansprüche, **dadurch gekennzeichnet, dass** eine Kurvenscheibe (61, 62) genau drei Laufbahnen (64) aufweist und genau drei Kugeln (63) vorgesehen sind.

8. Bremsvorrichtung nach einem der vorangehenden Ansprüche, **dadurch gekennzeichnet, dass** die Laufbahn (64) in mindestens einem Endabschnitt eine muldenförmige Vertiefung (67) aufweist.

9. Bremsvorrichtung nach einem der vorangehenden Ansprüche, **dadurch gekennzeichnet, dass** die Stellvorrichtung mindestens zwei seriell gekoppelte Stelltriebe (6, 7) aufweist.

10. Bremsvorrichtung nach Anspruch 9, **dadurch gekennzeichnet, dass** einer der Stelltriebe (6) eine Kugelrampenanordnung aufweist, und ein anderer Stelltrieb (7) eine nach einem anderen Wirkprinzip arbeitende Verstelleinrichtung.

11. Bremsvorrichtung nach einem der vorangehenden Ansprüche, **dadurch gekennzeichnet, dass** zumindest einer der Kurvenscheiben (61, 62) als Sinterbauteil oder als Kaltfliesspressteil ausgebildet ist.

## Claims

1. Electromechanical brake device (1) for a motor vehicle, comprising an electromotive actuating device (5) and a brake part (32) which is connected thereto, can be adjusted by the actuating device (5) and can be brought into braking engagement with a counter-brake part (2),
wherein the actuating device (5) has at least one actuating drive (6, 7)
wherein the actuating drive (6) has a ball ramp arrangement (6) comprising two cam disks (61, 62),
the cam disks (61, 62) being drivable in rotation relative to one another about an axis (A) by an electric servomotor (41, 42), and
have axially opposite raceways (64) lying obliquely to the axis (A), between each of which a ball (63) is arranged to roll off
wherein the raceways (64) have an at least partially rounded cross-sectional profile with a raceway radius (rg), and the ball (63) has a ball diameter (Db), wherein a ratio (C) greater than 0.5 is formed between the raceway radius (rg) and the ball diameter (Db)
**characterized in**
**in that** the raceway (64) has a flattening in at least one end section.

2. Braking device according to claim 1, **characterized in that** the ratio (C) is less than or equal to 0.75.

3. Braking device according to one of the preceding claims, **characterized in that** the ratio (C) is 0.55.

4. Braking device according to one of the preceding claims, **characterized in that** the raceway (64) has a continuously circularly curved cross-sectional profile.

5. Braking device according to one of the preceding claims, **characterized in that** the raceway (64) has a Gothic cross-sectional profile.

6. Braking device according to one of the preceding claims, **characterized in that** the track (64) has a linear or non-linear course of inclination.

7. Braking device according to one of the preceding claims, **characterized in that** a cam disc (61, 62) has exactly three raceways (64) and exactly three balls (63) are provided.

8. Braking device according to one of the preceding claims, **characterized in that** the raceway (64) has a trough-shaped depression (67) in at least one end section.

9. Braking device according to one of the preceding claims, **characterized in that** the actuating device has at least two serially coupled actuating drives (6, 7).

10. Braking device according to claim 9, **characterized in that** one of the actuating drives (6) has a ball ramp arrangement, and another actuating drive (7) has an adjusting device operating according to a different operating principle.

11. Braking device according to one of the preceding claims, **characterized in that** at least one of the cam disks (61, 62) is designed as a sintered component or as a cold extrusion part.

## Revendications

1. Dispositif de freinage électromécanique (1) pour un véhicule automobile, comprenant un dispositif de réglage électromoteur (5) et un élément de freinage (32) relié à celui-ci, qui peut être réglé par le dispositif de réglage (5) et peut être amené en engagement de freinage avec un élément de freinage antagoniste (2),
le dispositif de réglage (5) présentant au moins un entraînement de réglage (6, 7) l'actionneur (6) présentant un agencement de rampes à billes (6) comprenant deux cames (61, 62),
les cames (61, 62) pouvant être entraînées en rotation l'une par rapport à l'autre autour d'un axe (A) par un servomoteur électrique (41, 42), et
présentent des chemins de roulement (64) axialement opposés et inclinés par rapport à l'axe (A), entre lesquels est disposée une bille (63) pouvant rouler
les chemins de roulement (64) présentant un profil de section transversale arrondi au moins par sections avec un rayon de chemin de roulement (rg), et la bille (63) présentant un diamètre de bille (Db), un rapport (C) supérieur à 0,5 étant formé entre le rayon de chemin de roulement (rg) et le diamètre de bille (Db).
**caractérisé en ce que**
**en ce que** la piste de roulement (64) présente un aplatissement dans au moins une section d'extrémité.

2. Dispositif de freinage selon la revendication 1, **caractérisé en ce que** le rapport (C) est inférieur ou égal à 0,75.

3. Dispositif de freinage selon l'une quelconque des revendications précédentes, **caractérisé en ce que** le rapport (C) est de 0,55.

4. Dispositif de freinage selon l'une des revendications précédentes, **caractérisé en ce que** la piste de roulement (64) présente un profil de section transversale courbé en cercle de manière continue.

5. Dispositif de freinage selon l'une des revendications précédentes, **caractérisé en ce que** la piste de roulement (64) présente un profil gothique en section transversale.

6. Dispositif de freinage selon l'une des revendications précédentes, **caractérisé en ce que** la piste (64) présente une évolution linéaire ou non linéaire de l'inclinaison.

7. Dispositif de freinage selon l'une des revendications précédentes, **caractérisé en ce qu'**un disque à came (61, 62) présente exactement trois chemins de roulement (64) et qu'exactement trois billes (63) sont prévues.

8. Dispositif de freinage selon l'une quelconque des revendications précédentes, **caractérisé en ce que** la piste de roulement (64) présente une cavité (67) en forme de cuvette dans au moins une partie d'extrémité.

9. Dispositif de freinage selon l'une des revendications précédentes, **caractérisé en ce que** le dispositif de réglage comporte au moins deux actionneurs (6, 7) couplés en série.

10. Dispositif de freinage selon la revendication 9, **caractérisé en ce que** l'un des actionneurs (6) présente un agencement de rampes à billes, et un autre actionneur (7) un dispositif de réglage fonctionnant selon un autre principe de fonctionnement.

11. Dispositif de freinage selon l'une des revendications précédentes, **caractérisé en ce qu'**au moins l'un des disques à came (61, 62) est réalisé sous la forme d'un composant fritté ou d'un composant extrudé à froid.
